# EUROPÄISCHE PATENTSCHRIFT

(11) **EP 1 785 220 B1**
(45) Veröffentlichungstag und Bekanntmachung des Hinweises auf die Patenterteilung: **26.08.2009**
(21) Anmeldenummer: 06405472.9
(22) Anmeldetag: 07.11.2006
(51) Int. Cl.: B23P 19/04, B27M 3/00

(54) **Verfahren und Vorrichtung zur Reparatur beschädigter Paletten**
Method and device for repairing damaged pallets
Procédé et dispositif pour réparer de palettes endommagées

(30) Priorität: 14.11.2005 CH 18182005
(43) Veröffentlichungstag der Anmeldung: 16.05.2007
(73) Patentinhaber: Holliger Paletten Logistik AG, 5706 Boniswil (CH)
(72) Erfinder: Holliger, Robert, 5706 Boniswil (CH)
(74) Vertreter: Rottmann, Maximilian

(56) Entgegenhaltungen:
- EP-A2- 0 823 629
- WO-A-00/78499
- WO-A-99/04926
- WO-A-20/04052739
- WO-A-20/05058717
- DE-A1- 4 308 580
- DE-A1- 10 015 636
- DE-A1- 19 822 229
- DE-C1- 4 435 574

## Beschreibung

Die vorliegende Erfindung bezieht sich auf ein Verfahren zur Reparatur beschädigter Paletten nach dem Oberbegriff des Anspruchs 1, sowie auf eine Anordnung zur Durchführung des Verfahrens nach dem Oberbegriff des Anspruchs 10.

Aus der DE-A-43 08 580 ist ein Verfahren sowie auf eine Vorrichtung zur Reparatur beschädigter Paletten bekannt. Die beschädigte Palette wird dazu in nach oben gekehrter Stellung auf einem Maschinentisch positioniert und fixiert. Danach werden die beschädigten Tragklötze und Latten mittels einer Trennvorrichtung herausgetrennt, welche in drei Koordinatenachsen verschiebbar gelagert ist. Die Trennvorrichtung weist einen Maschinenkopf auf, der mit einem senkrechten Antriebsschaft versehen ist, an dem endseitig ein rotierendes Kreissägeblatt angebracht ist. Der Durchmesser des Kreissägeblatts wird so gewählt, dass dieses kleiner ist als die lichte Weite zwischen den in Längsrichtung verlaufenden Reihen von Tragklötzen. Dadurch lässt sich das Kreissägeblatt zwischen die in Längsrichtung verlaufenden Reihen von Tragklötzen einbringen, so dass gezielt die beschädigten Teile der Palette herausgesägt werden können. Beim Heraustrennen der beschädigten Teile werden die Befestigungsmittel - Nägel- durchtrennt. Nachdem die beschädigten Teile herausgetrennt sind, wird die Palette einer Beschickungs- und Befestigungsstation zugeführt, wo die zu ersetzenden Teile an die entsprechende Stelle zugeführt und positioniert werden. Die eigentliche Befestigung der neuen Teile erfolgt mittels zwei Nageleinrichtungen, die gleichzeitig von oben und unten Nägel einschlagen.

Aus der DE-A-198 22 229 ist ebenfalls ein Verfahren und eine Vorrichtung zur Reparatur beschädigter Paletten aus Holz bekannt. Hier werden in einem ersten Arbeitsschritt die beschädigten Bretter und/oder Kufen von der zu reparierenden Palette abgetrennt. In einem nächsten Arbeitsschritt werden die neuen Teile auf die Palette ausgerichtet und danach vernagelt. In einem weiteren Arbeitsschritt werden die Paletten gepresst, so dass allenfalls überstehende Nägel sowie nicht ganz anliegende Bretter angepresst werden. Die Vorrichtung zum Durchführen dieser Verfahrensschritte umfasst einen Zuförderer zum Zuführen der Paletten, einen Entstapler zum Vereinzeln der Paletten, eine Demontagestation zum selektiven Abtrennen der defekten Teile, eine Bestückungsstation zum Ersetzen der defekten Teile, eine Zentrier- und Nagelstation zum Befestigen der ersetzten Teile sowie eine Anpressstation zum Anpressen von überstehenden Nägeln sowie nicht ganz anliegenden Brettern. Die DE-A-198 22 229 bildet den nächstliegenden Stand der Technik und offenbart ein Verfahren bzw. eine Anordnung nach dem Oberbegriff des Anspruchs 1 bzw. 10.

Schliesslich ist aus der DE-A-100 15 636 eine Vorrichtung und ein Verfahren zur Zentrierung und Justierung von zu vernagelnden Holzpaletten bekannt. Die von defekten Teilen befreite Palette wird dabei einer Justiervorrichtung zugeführt, die manuell mit den zu ersetzenden Teilen bestückt wird. In der Justiervorrichtung werden der Palettenkörper mitsamt den zu ersetzenden Teilen justiert und arretiert. Anschliessend werden die Ersatzteile mit dem Palettenkörper vernagelt. Die gesamte Justiervorrichtung ist auf einem Grundgestell aufgebaut, dem ein Förderer zum Zuführen der Palette vorgeschaltet ist. Die Justiervorrichtung selber ist mit einer Zentriervorrichtung für die Palette sowie für die Kufen versehen.

Die Erfindung zielt darauf ab, ein Verfahren sowie eine Anordnung zur Reparatur beschädigter Paletten derart weiterzubilden, dass die Paletten schnell, einfach und zuverlässig repariert werden können.

Hierzu wird nach der Erfindung ein Verfahren gemäss dem Anspruch 1 sowie eine Anordnung gemäss dem Anspruch 10 bereitgestellt.

Bevorzugte Ausführungsformen und Weiterbildungen des Verfahrens sind in den abhängigen Ansprüchen 2 bis 9 umschrieben, während bevorzugte Weiterbildungen der Anordnung in den abhängigen Ansprüchen 11 bis 22 umschrieben

Der grundlegende Erfindungsgedanke ist darin zu sehen, dass in einem ersten Arbeitsschritt die Verbindungselemente der zu ersetzenden Palettenteile durchtrennt werden, dass anschliessend sowohl die neuen Palettenteile wie auch die teildemontierte Palette in eine Befestigungsstation überführt werden, und dass danach die neuen Palettenteile in der Befestigungsstation durch Anbringen von neuen Verbindungselementen an der Palette fixiert werden, indem sämtliche neuen Verbindungselemente von der Oberseite der Palette her angebracht werden. Damit die Verbindungselemente ausschliesslich von der Oberseite der Palette her angebracht werden können, wird die Palette vorzugsweise durch den modulartigen Austausch von Palettenteilen repariert, wobei ein defektes Bodenbrett immer in kufenform, d.h. zusammen mit den drei zugehörigen Verbindungsklötzen entfernt wird. Die neue Kufe lässt sich danach relativ einfach von der Oberseite der Palette her befestigen. Vor dem Anbringen einer neuen Kufe wird auch die Lage der sich in dem Deckbrett oberhalb der neu anzubringen Kufe befindlichen Verbindungselemente erfasst und abgespeichert, so dass danach die neuen Verbindungselemente versetzt zu den bestehenden Verbindungselementen angebracht werden können, was ein wichtige Voraussetzung für eine sichere und dauerhaft-zuverlässige Befestigung der neuen Kufe ist, da auf diese Weise die Gefahr eliminiert wird, dass die neuen Verbindungselemente beim Anbringen durch die bereits vorhandenen Verbindungselemente schräg abgelenkt oder gar abgeknickt oder abgebrochen werden. Um zu erkennen, ob und ggf. welche Teile bzw. Module an der Palette fehlen wird vorzugsweise eine automatische Prüfstation vorgesehen. Diese Prüfstation ist zudem vorzugsweise mit Sensoren zum Erkennen der Position von sich im Deckbrett befindlichen Verbindungselementen versehen. Durch die genannten Massnahmen wird zugleich die Voraussetzung für eine weitgehend vollautomatisierte Reparatur der Paletten geschaffen.

Ein bevorzugtes Ausführungsbeispiel des erfindungsgemässen Verfahrens sowie der Anordnung werden nachfolgend unter Bezugnahme auf die beiliegenden Zeichnungen näher erläutert. In den Zeichnungen zeigt:
- Fig. 1: eine perspektivische Ansicht einer Palette;
- Fig. 2: eine perspektivische Ansicht einer teildemontierten Palette;
- Fig. 3: eine Draufsicht auf die Palettenreparaturanlage, und
- Fig. 4: eine perspektivische Ansicht auf die Befestigungsstation der Palettenreparaturanlage.

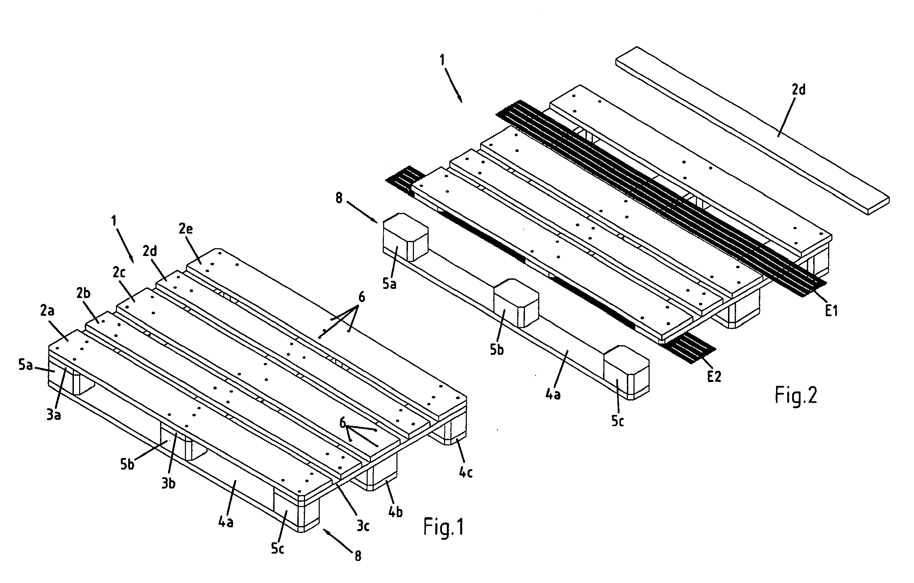

Die Fig. 1 zeigt eine Palette 1 in einer perspektivischen Ansicht. Die hier dargestellte Euro-Palette 1 ist ausschliesslich aus Holzteilen gefertigt und besteht aus fünf in Längsrichtung verlaufenden Deckbrettern 2a-2e, drei darunter quer angeordneten Querbrettern 3a-3c sowie drei in Längsrichtung verlaufenden Bodenbrettern 4a-4c. Jedes Bodenbrett 4a ist mittels drei Verbindungsklötzen 5a-5c mit den drei Querbrettern 3a-3c verbunden. Von den fünf Deckbrettern sind die beiden innen liegenden Deckbretter 2b, 2d schmaler ausgebildet als die beiden äusseren und das mittlere Deckbrett 2a, 2c, 2e. Die einzelnen Paletten-Teile sind mittels Verbindungselementen in Form von Nägeln 6 miteinander verbunden, wobei sowohl von der Oberseite wir auch von der Unterseite her Nägel eingeschlagen sind. Die von oben eingeschlagenen Nägel 6 verbinden das jeweilige Deckbrett 2a-2e mit dem darunter liegenden Querbrett 3a-3e sowie dem zugehörigen Verbindungsklotz, während die von unten eingeschlagenen Nägel das jeweilige Bodenbrett 4a-4c mit dem zugehörigen Verbindungsklotz verbinden. D.h. ein von oben eingeschlagener Nagel durchdringt sowohl das jeweilige Deck- wie auch das Querbrett und ist im Verbindungsklotz verankert, während ein von unten eingeschlagener Nagel das jeweilige Bodenbrett durchdringt und im entsprechenden Verbindungsklotz verankert ist. Die von unten eingeschlagenen Nägel sind aus dieser Darstellung nicht ersichtlich.

Die Fig. 2 zeigt eine Palette 1 in teildemontiertem Zustand. Um ein defektes Teil wie z.b. ein beschädigtes oder gebrochenes Deckbrett 2d von der Palette 1 entfernen zu können, werden die entsprechenden Nägel durchtrennt. Dies geschieht, indem die dieses Deckbrett 2d mit der Palette 1 verbindenden Nägel unmittelbar oberhalb der drei Querbretter 3a-3c durchtrennt werden. Um jedes der drei inneren Deckbretter 2b, 2c, 2d einzeln entfernen zu können, wird ein Bandsägeblatt eingesetzt, das schmaler ist als der Abstand zwischen zwei benachbarten Deckbrettern 2a-2b; 2b-2c; 2c-2d, 2d-2e (Fig.1), jedoch länger als das jeweilige Deckbrett. Die Ebene, in der sich das Sägeblatt zum Durchtrennen der Nägel des jeweiligen Deckbretts 2d bewegt, ist schematisch angedeutet und mit E1 bezeichnet. Beim Durchtrennen der Verbindungselemente wird darauf geachtet, dass die an der Palette verbleibenden Teile, namentlich die Querbretter, nicht beschädigt werden.

Ggf. kann auch zumindest eines der beiden äussreren Querbretter 3a, 3c entfernt werden, indem die Nägel sowohl unterhalb wie auch oberhalb des jeweiligen Querbretts 3a, 3c durchtrennt werden. In diesem Fall ist die Trennebene des Sägeblatts gegenüber den beiden eingezeichneten Ebenen E1 und E2 um 90° verschoben.

Ein defektes Bodenbrett 4a bzw. ein defekter Verbindungsklotz wird vorzugsweise nicht alleine entfernt, sondern als Modul in Form einer Kufe 8; d.h. das jeweilige Bodenbrett wird immer zusammen mit den drei zugehörigen Verbindungsklötzen 5a-5c entfernt. Zum Entfernen der jeweiligen Kufe 8 wird das Sägeblatt in einer Ebene E2 bewegt, in der die Nägel direkt unterhalb des jeweiligen Querbretts 3a-3c durchtrennt werden. Auch hier wird darauf geachtet, dass beim Durchtrennen der Verbindungselemente die an der Palette verbleibenden Querbretter nicht beschädigt werden. Das modulartige Entfernen einer Kufe 8 hat den Vorteil, dass die Ersatzkufe von der Oberseite der Palette her an dieser befestigt werden kann, wie anschliessend noch näher erläutert wird.

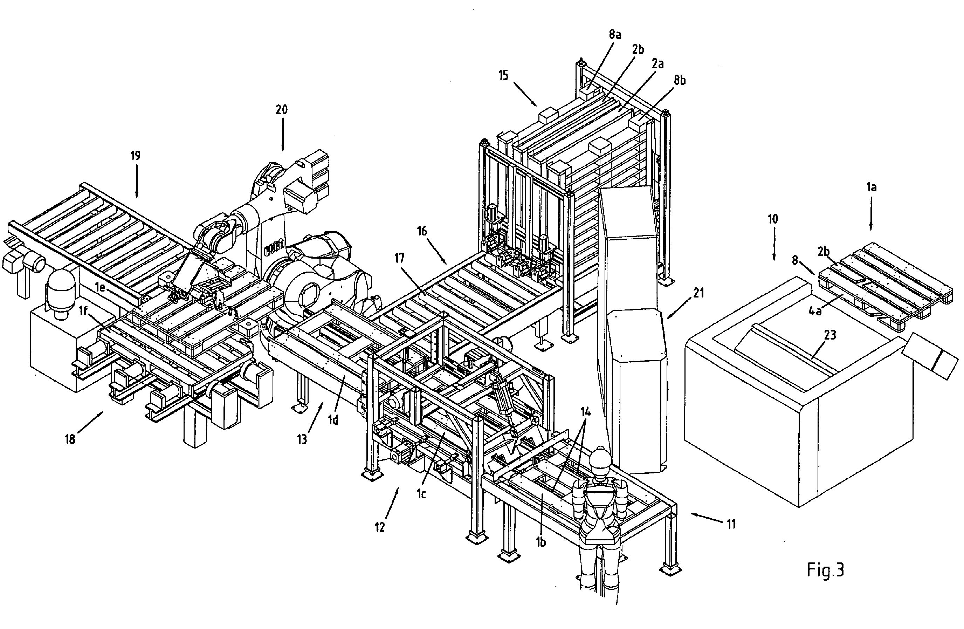

Fig. 3 zeigt eine Draufsicht auf die Anordnung zur Reparatur beschädigter Paletten, welche nachfolgend als Palettenreparaturanlage bezeichnet wird. Diese Palettenreparaturanlage besteht im Wesentlichen aus der einer Demontagestation 10, einer Einführstation 11, einer Prüfstation 12, einer Übergabestation 13, einem Fördermittel 14, einem Ersatzteilmagazin 15, einer Ersatzteilübergabestation 16, einem Ersatzteil-Förderer 17, einer als Nagelstation 18 ausgebildeten Befestigungsstation, einem Abgabeförderer 19, einem Roboter 20, sowie einer Steuereinheit 21 besteht. Im weiteren ist eine zu reparierende Palette 1a ersichtlich, welche beispielhaft mit einem defekten Deckbrett 2b sowie einer defekten Kufe 8 versehen ist. Namentlich ist das Bodenbrett 4a der Kufe 8 defekt.

### Die Funktion der Palettenreparaturanlage stellt sich wie folgt dar:

Die defekte Palette 1a wird zuerst in der schematisch dargestellten Demontagestation 10 bearbeitet, indem die defekten Teile der Palette 1a, im vorliegenden Beispiel das Deckbrett 2b sowie die Kufe 8, demontiert werden. Die Demontage der Palette 1a erfolgt in der zuvor beschriebenen Weise, indem zuerst die Verbindungselemente -Nägel- des Deckbretts 2b sowie der Kufe in den zuvor beschriebenen Ebenen E1 bzw. E2 (Fig. 2) mittels eines Bandsägeblattes 23 durchtrennt und die entsprechenden Teile 2b, 8 danach entfernt werden. Vorzugsweise ist das Bandsägeblatt 23 zumindest in zwei Stufen höhenverstellbar. Die untere Stufe ist dabei so gewählt, dass beim Zuführen einer Palette die Nägel unmittelbar unterhalb eines Querbretts durchtrennt werden, während in der oberen Stufe die Nägel unmittelbar oberhalb eines Querbretts durchtrennt werden. Jedenfalls sind die Stufen derart gewählt, dass allenfalls das zu entfernende Teil vom Sägeblatt beschädigt oder eingesägt wird, nicht jedoch die an der Palette verbleibenden Teile, namentlich die Querbretter. Wie bereits vorgängig angeführt, kann ggf. auch das eine und/oder andere der beiden äusseren Querbretter entfernt werden, indem die Nägel sowohl unterhalb wie auch oberhalb des jeweiligen Querbretts durchtrennt werden. Dazu muss die Palette 1a gegenüber der gezeigten Stellung um 90° um ihre Hochachse verdreht in die Demontagestation 10 eingeführt werden.

Vorzugsweise werden die von der Palette entfernten Teile einem hier nicht näher beschriebenen Wiederverwertungsprozess zugeführt. Nachdem die zu beschädigten Teile bzw. Module demontiert sind, wird die teildemontierte Palette an die Einführstation 11 übergeben. Im vorliegenden Fall geschieht dies manuell, allerdings können hierzu durchaus auch automatische Mittel vorgesehen werden.

Die teildemontierte Palette 1b wird danach von dem Fördermittel 14 von der Einführstation 11 in die Prüfstation 12 befördert. Das Fördermittel 14 kann beispielsweise als Schleppkettenförderer ausgebildet sein. In der Prüfstation 12 wird mittels Sensoren festgestellt, welche Teile bzw. Module an der Palette 1c fehlen. Grundsätzlich muss nur festgestellt werden, welches Grundmodul bzw. welche Grundmodule fehlt/fehlen und zu ersetzen ist/sind. Insgesamt sind vier unterschiedliche Grundmodule vorgesehen, welche alle in dem Ersatzteilmagazin 15 aufgenommen sind. Als Grundmodule sind zwei unterschiedlich breite Kufen 8a, 8b sowie zwei unterschiedlich breite Deckbretter 2a, 2b vorgesehen. Wie ersichtlich, sind die Kufen 8a, 8b derart in dem Ersatzteilmagazin 15 aufgenommen, dass das jeweilige Bodenbrett unten liegt und die jeweiligen Verbindungsklötze nach oben gerichtet sind. Die zum Erkennen des Fehlens eines Grundmoduls bzw. mehrerer Grundmodule vorgesehenen Sensoren werden nachfolgend noch näher erläutert. In der Prüfstation 12 wird zudem das Nagelbild der Palette erfasst, indem die Lage bestimmter Nägel in Relation zu einem Referenzpunkt, beispielsweise einer Palettenecke, erfasst wird. Vorzugsweise wird nicht das gesamte Nagelbild erfasst, sondern nur die Lage derjenigen Nägel, die sich in einem Deckbrett oberhalb einer entfernten bzw. neu anzubringenden Kufe befinden. Mit anderen Worten: es muss nur die Lage derjenigen Nägel bzw. Nagelköpfe erfasst werden, die sich in einem der drei Deckbretter befinden, unter denen ggf. eine Kufe entfernt wurde. Wenn keine Kufe entfernt wurde, muss demzufolge auch die Lage der Nägel nicht erfasst werden.

Einen Sonderfall stellt eine sogenannte "Lotterpalette" dar, bei der zwar keine Teile defekt sind, die Palette aber nicht mehr ausreichend stabil ist, indem beispielsweise mehrere Deckbretter und/oder eine oder mehrere Kufen lose sind. In diesem Fall wird die gesamte Palette durch das Anbringen von zusätzlichen Nägeln verstärkt, wobei zuerst das Nagelbild der gesamten Palette erfasst wird, so dass danach die neuen Nägel versetzt zu den bestehenden Nägel angebracht werden können.

Sowohl das bestehende Nagelbild wie auch die Information bezüglich der fehlenden und zu ersetzenden Teile wird von der Prüfstation 12 elektronisch an die Steuereinheit 21 übermittelt. Vorzugsweise wird zuerst festgestellt, welches bzw. welche der vier Grundmodule fehlt/fehlen, um danach ggf. die Lage der Nägel im Bereich des/der sich über einem fehlenden Grundmodul liegenden Deckbretts bzw. der Deckbretter zu erfassen.

Das Erfassen des Nagelbildes beim Fehlen einer Kufe ist deshalb besonders wichtig, da im Deckbrett oberhalb der anzubringenden Kufe die Nagelköpfe noch im Deckbrett vorhanden sind und beim nachfolgenden Nagelvorgang darauf geachtet werden muss, dass die neuen Nägel versetzt zu den bestehenden Nägeln eingeschlagen werden. Trifft nämlich ein neuer Nagel auf den Kopf eines bereits im Deckbrett vorhandenen Nagels, so besteht die Gefahr, das sich der neue Nagel beim Einschlagen verbiegt und/oder dass er schräg in die Palette getrieben wird, so dass letztlich keine sichere Befestigung der neuen Kufe gewährleistet werden kann. Die trifft insbesondere auch bei einer Lotterpalette zu.

Muss hingegen nur ein Deckbrett ersetzt werden, so sind die Nagelköpfe auf der Oberseite der Palette nicht mehr vorhanden, da zuvor das alte Deckbrett mitsamt den Nagelköpfen entfernt wurde. In diesem Fall ist nur noch der Nagelschaft in der Palette vorhanden, was beim Einschlagen von neuen Nägeln erfahrungsgemäss kaum Probleme bereitet.

Zum Erfassen des Nagelbildes werden vorzugsweise Induktiv-Sensoren eingesetzt, mittels welchen die Position der aus Stahl bestehenden Nägel genau erfasst werden kann. Die Position der einzelnen Nägel wir in Relation zu einem Referenzpunkt der Palette, beispielsweise einer Palettenecke, erfasst. Zum Erkennen, ob ein Deckbrett bzw. mehrere Deckbretter und/oder eine bzw. mehrere Kufe(n) fehlen, ist die Prüfstation sowohl mit Lichtschranken wie auch mit mechanischen Kontakt-Schaltern versehen.

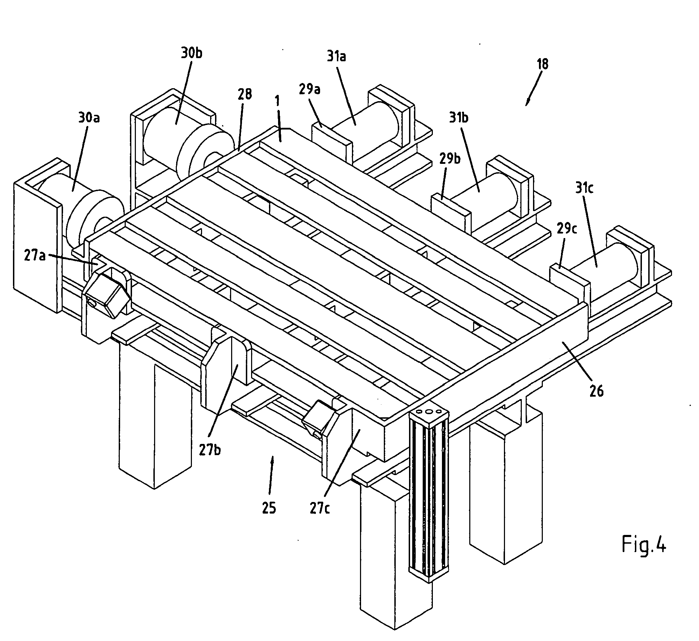

Nach der Prüfung in der Prüfstation 12 wird die teildemontierte Palette 1 c mittels des Fördermittels 14 weiter in die Übergabestation 13 überführt. Bevor die teildemontierte Palette 1d von der Übergabestation 13 an die Nagelstation 18 übergeben wird, wird ggf. eine neue Kufe von der Ersatzteilübergabestation 16 mittels des Roboters 20 in die Nagelstation 18 überführt und dort in einer vorbestimmten Position abgelegt. Danach wird die teildemontierte Palette mittels des Roboters von der Übergabestation 13 in die Nagelstation 18 überführt, und zwar so, dass die Palette gegenüber der neuen Kufe richtig positioniert ist. Danach kann ggf. noch ein Deckbrett oder mehrere Deckbretter mittels des Roboters von der Ersatzteilübergabestation 16 an die Nagelstation übergeben und auf der sich bereits in der Nagelstation 18 befindlichen Palette abgelegt werden. Nun wird die Palette 1f in der Nagelstation genau fixiert, indem sie gegen Anschläge gedrückt wird. Die genaue Ausbildung der Nagelstation 18 wird nachfolgend anhand der Fig. 4 noch näher erläutert. Der Roboter 20 ist auf seiner Vorderseite mit Greifmitteln versehen, welche sowohl ein sicheres Erfassen einzelner Palettenteile wie auch einer teildemontierten Palette ermöglichen.

Nachdem die Palette 1f in der Nagelstation 18 sowohl positioniert wie auch fixiert ist, werden die neuen Teile bzw. Module an der Palette 1 festgenagelt. Diese Nagelung erfolgt mittels des Roboters 20, indem dieser die Nägel von der Oberseite her durch das jeweilige Deck- und Querbrett hindurch in den entsprechenden Verbindungsklotz der jeweiligen Kufe treibt. Der Nachschub von Nägeln erfolgt über ein Nagelmagazin (nicht dargestellt), welchem der Roboter 20 die für den jeweiligen Nagelvorgang benötigte Anzahl Nägel entnimmt. Indem die Palette 1f während des Nagelvorgangs belastet und auf ein vorbestimmtes Mass gedrückt wird, kann sichergestellt werden, dass die Palette 1f nach dem Fixieren der neuen Teile bzw. Module innerhalb eines vorgegebenen Nennmasses liegt.

Nachdem die neuen Teile bzw. Module mit der Palette 1f vernagelt sind und die Palette 1f damit komplett wiederhergestellt ist, wird die reparierte Palette 1e mittels des Roboters 20 aus der Nagelstation 18 entfernt und an den Abgabeförderer 19 übergeben, der die Palette in eine nicht näher dargestellte Kontrollstation befördert. In der Kontrollstation wird einerseits überprüft, ob die Palette masshaltig ist, d.h. ob deren Breite, Länge und Höhe innerhalb des vorgegebenen Nennmasses liegt. Zudem wird der lichte Abstand zwischen den Verbindungsklötzen überprüft, der insbesondere für das Einführen der Gabeln eines Gabelstaplers von Bedeutung ist. Wenn vorgängig jeweils von neuen Palettenteilen die Rede ist, so sind darunter nicht zwingend fabrikneue Teile zu verstehen, sondern es kann sich dabei auch um bereits gebrauchte und/oder aufgefrischte, jedoch intakte Teile handeln. Anstelle herkömmlicher Nägel können beispielsweise auch Nagelschrauben, Schrauben o.ä. als Verbindungselemente zum Befestigen der neuen Palettenteile bzw. Module verwendet werden.

Der Roboter übernimmt vielfältige Aufgaben, indem er sowohl für das Zuführen der neuen Teile in die Nagelstation, wie auch für die Übergabe der teildemontierten Paletten von der Übergabestation in die Nagelstation, wie auch für den eigentlichen Nagelvorgang und das anschliessende Übergeben der reparierten Palette von der Nagelstation in den Abgabeförderer verantwortlich ist.

Schliesslich wird die reparierte Palette noch einer Pressstation zugeführt, in welcher die Palette von oben und/oder unten derart belastet wird, das ggf. noch vorstehende Nägel vollständig in die Palette hineingedrückt werden.

Die Fig. 4 zeigt die Nagelstation 18 in einer perspektivischen Ansicht. Die Nagelstation 18 besteht aus einer tischartigen Unterlage 25, welche mit einer feststehenden Leiste 26 zur Bildung eines ersten Anschlags für die eine Stirnseite der Palette 1 versehen ist. Um 90° versetzt zu dieser Leiste 26 sind drei feststehende Winkel 27a-27c angeordnet, welche als Anschläge für die eine Längsseite der Palette 1 dienen. Diese drei Winkel 27a-27c korrespondieren in der Lage mit den drei entlang eines seitlichen Bodenbretts angeordneten Verbindungsklötzen 5a-5c (Fig. 1). Auf der der feststehenden Leiste 26 gegenüberliegenden Seite ist eine weitere Leiste 28 angeordnet, welche in Längsrichtung der Palette 1 verschiebbar ist. Gegenüberliegend zu den drei feststehenden Winkeln sind drei Platten 29a-29c angeordnet, welche quer zur Längsachse der Palette 1 verschiebbar sind. Sowohl die verschiebbare Leiste 28 wie auch die verschiebbaren Platten 29a-29c dienen der Positionierung und Fixierung der jeweiligen Palette 1, indem diese durch Verschieben der Leiste 28 und der Platten 29a-29c gegen die feststehenden Anschläge 26, 27a-27c gedrückt wird. Zum Betätigen bzw. Verschieben der Leiste 28 und der Platten 29a-29c sind Hydraulikzylinder 30a, 30b, 31-31c vorgesehen. Die Betätigung dieser Hydraulikzylinder 30a, 30b, 31-31c erfolgt vorzugsweise ebenfalls über die Steuereinheit 21. Nachdem sowohl die verschiebbare Leiste 28 wie auch die Platten 29a-29c in die in der Fig. 4 gezeigte Position verschoben sind, wird die Palette 1 zusammen mit den ggf. noch nicht fixierten neuen Palettenteilen gegen die festen Anschläge 26, 27a-27c gedrückt und damit sowohl positioniert wie auch fixiert. Zudem werden mit Ausnahme des zentralen Verbindungsklotzes alle acht aussen liegenden Verbindungsklötze der drei Kufen ausgerichtet. Zusätzlich wird durch das Verschieben der Leiste 28 wie auch der Platten 29a-29c sichergestellt, dass sich die Aussenmasse der Palette 1 innerhalb vorgegebener Nennmasse befinden. Zur Überwachung der Aussenmasse der Palette können ggf. zusätzliche Sensoren vorgesehen werden.

Indem sämtliche der neu anzubringenden Palettenteile von der Oberseite der Palette her befestigt werden können, ist die Handhabung der Paletten sehr einfach und der Durchsatz der gesamten Anlage vergleichsweise hoch.

### Bezugszeichenliste :

- 1.: Palette
- 2.: Deckbrett
- 3.: Querbrett
- 4.: Bodenbrett
- 5.: Verbindungsklotz
- 6.: Nägel
- 7.:
- 8.: Kufe
- 9.:
- 10.: Demontagestation
- 11.: Einführstation
- 12.: Prüfstation
- 13.: Übergabestation
- 14.: Fördermittel
- 15.: Ersatzteilmagazin
- 16.: Ersatzteilübergabestation
- 17.: Ersatzteil-Förderer
- 18.: Nagelstation
- 19.: Abgabeförderer
- 20.: Roboter
- 21.: Steuereinheit
- 22.:
- 23.: Sägeblatt
- 24.:
- 25.: Unterlage
- 26.: Leiste (feststehend)
- 27.: Winkel (feststehend)
- 28.: Leiste (verschwenkbar)
- 29.: Platten (verschwenkbar)
- 30.: Hydraulikzylinder
- 31.: Hydraulikzylinder

## Patentansprüche

1. Verfahren zur Reparatur von mittels Verbindungselementen zusammengehaltenen Paletten (1a), insbesondere von Euro-Holzpaletten, welche fünf Deckbretter, drei Querbretter und drei Bodenbretter aufweisen, wobei die Bodenbretter mittels Verbindungsklötzen mit den Querbrettem verbunden sind und die genannten Palettenteile mittels Verbindungselementen, insbesondere Nägeln, zusammengehalten werden, wobei in einem ersten Arbeitsschritt die Verbindungselemente des zu ersetzenden Palettenteils bzw. der zu ersetzenden Palettenteile durchtrennt und das zu ersetzenden Palettenteil bzw. die zu ersetzenden Palettenteile danach entfernt wird/werden, dass in einem nachfolgenden Arbeitsschritt sowohl die neuen Palettenteile wie auch die teildemontierte Palette in eine Befestigungsstation (18) überführt werden, und dass danach in einem weiteren Arbeitsschritt die neuen Palettenteile in der Befestigungsstation durch Anbringen von neuen Verbindungselementen an der Palette (1f) befestigt werden, **dadurch gekennzeichnet, dass** die teildemontierte Palette (1b) vor dem Überführen in die Befestigungsstation (18) einer Prüfstation (13) zugeführt wird, in der die Lage von sich in einem oder mehreren Deckbrett(em) befindlichen Verbindungselementen zumindest teilweise erfasst und abgespeichert wird, und dass sämtliche neuen Verbindungselemente von der Oberseite der Palette (1f) her angebracht werden.

2. Verfahren nach Anspruch 1, wobei die zu reparierenden Paletten mit Deckbrettern, Bodenbrettem und Verbindungsklötzen versehen sind, **dadurch gekennzeichnet, dass** die Palette (1) durch den modulartigen Austausch von Palettenteilen repariert wird, indem ein oder mehrere Deckbrett(er) (2a-2e) und/oder eine oder mehrere aus einem Bodenbrett (4a) sowie drei Verbindungsklötzen (5a-5c) bestehende Kufe(n) (8) ersetzt wird/werden.

3. Verfahren nach Anspruch 1 oder 2, **dadurch gekennzeichnet, dass** vor dem Befestigen einer neuen Kufe die Lage von sich in dem Deckbrett oberhalb der neu anzubringenden Kufe befindlichen Verbindungselementen erfasst und abgespeichert wird, und dass danach die neuen Verbindungselemente versetzt zu den sich im genannten Deckbrett befindlichen Verbindungselementen angebracht werden.

4. Verfahren nach Anspruch 3, **dadurch gekennzeichnet, dass** die zum Befestigen einer neuen Kufe vorgesehenen Verbindungselemente von der Oberseite der Palette her durch das jeweilige Deck- und Querbrett hindurch bis in die darunter liegenden Verbindungsklötze der jeweiligen Kufe getrieben werden.

5. Verfahren nach einem der vorhergehenden Ansprüche, **dadurch gekennzeichnet, dass** ein Deckbrett (2a-2e) entfernt wird, indem die jeweiligen Verbindungselemente (6) unmittelbar oberhalb eines Querbretts (3a-3c) durchtrennt werden.

6. Verfahren nach einem der vorhergehenden Ansprüche, **dadurch gekennzeichnet, dass** eine Kufe (8) entfernt wird, indem die jeweiligen Verbindungselemente der der jeweiligen Kufe (8) zugeordneten Verbindungsklötze (5a-5c) unmittelbar unterhalb eines Querbretts (3a-3c) durchtrennt werden.

7. Verfahren nach einem der Ansprüche 2 bis 6, **dadurch gekennzeichnet, dass** eine neu anzubringende Kufe vor der teildemontierten Palette in die Befestigungsstation (18) überführt wird und dass danach die teildemontierte Palette von oben auf die neue Kufe bzw. die neuen Kufen aufgesetzt wird und durch Anbringen von neuen Verbindungselementen von der Oberseite der Palette her befestigt wird.

8. Verfahren nach einem der Ansprüche 2 bis 7, **dadurch gekennzeichnet, dass** ein neu anzubringendes Deckbrett nach der teildemontierten Palette in die Befestigungsstation (18) überführt und von oben auf die sich in der Befestigungsstation befindliche teildemontierte Palette aufgesetzt wird, und dass danach das jeweilige Deckbrett durch Anbringen von neuen Verbindungselementen von der Oberseite der Palette her befestigt wird.

9. Verfahren nach einem der vorhergehenden Ansprüche, **dadurch gekennzeichnet, dass** die in der Befestigungsstation (18) aufgenommene Palette während des Anbringens der neuen Verbindungselemente fixiert und derart belastet wird, dass sich deren Kontur innerhalb eines Normmasses befindet.

10. Anordnung zur Durchführung des Verfahrens nach einem der vorhergehenden Ansprüche, mit einer Sägestation (10) zum Durchtrennen der die Palettenteile fixierenden Verbindungselemente (6), einer Befestigungsstation (18) zum Befestigen der neuen Palettenteile sowie einer Vorrichtung zum Anbringen von neuen Verbindungselementen in der Befestigungsstation (18), **dadurch gekennzeichnet, dass** der Befestigungsstation (18) eine Prüfstation (12) vorgeschaltet ist, welche mit Mitteln zum Erkennen der Lage von sich in einem oder mehreren Deckbrett(em) (2a-2e) befindlichen Verbindungselementen (6) einer teildemontierten Palette (1c) versehen ist.

11. Anordnung nach Anspruch 10, **dadurch gekennzeichnet, dass** die Prüfstation (12) mit Mitteln zum Erkennen fehlender Palettenteile einer teildemontierten Palette (1c) versehen ist.

12. Anordnung nach Anspruch 11, **dadurch gekennzeichnet, dass** die Prüfstation mit optischen und/oder mechanischen Sensoren zum Erkennen des Fehlens von Palettenteilen versehen ist.

13. Anordnung nach einem der Ansprüche 10 bis 12, **dadurch gekennzeichnet, dass** die Prüfstation mit optischen und/oder induktiven Sensoren zum Erkennen der Lage von sich im Deckbrett befindlichen Nägeln bzw. Nagelköpfen versehen ist.

14. Anordnung nach einem der Ansprüche 10 bis 13, **dadurch gekennzeichnet, dass** die Anordnung im weiteren ein Ersatzteilmagazin (15) umfasst, welches zur Aufnahme von unterschiedlichen Palettenteilen (2a, 2b) bzw. Palettenmodulen (8a, 8b) ausgebildet ist.

15. Anordnung nach Anspruch 14, **dadurch gekennzeichnet, dass** das Ersatzteilmagazin (15) zur Aufnahme von unterschiedlich breiten Kufen (8a, 8b) sowie unterschiedlich breiten Deckbrettern (2a, 2b) ausgebildet ist.

16. Anordnung nach einem der Ansprüche 10 bis 15, **dadurch gekennzeichnet, dass** die Anordnung eine Steuereinheit (21) umfasst, welche mit der Prüfstation (18) sowie der Vorrichtung zum Anbringen von neuen Verbindungselementen verbunden ist, wobei die Vorrichtung in Abhängigkeit der Lage von sich in einem oder mehreren Deckbrett(em) (2a-2e) befindlichen Verbindungselementen (6) einer teildemontierten Palette (1c) derart ansteuerbar ist, dass die neuen Verbindungselemente versetzt zu sich ggf. in einem oder mehreren Deckbrett(ern) (2a-2e) befindlichen Verbindungselementen anbringbar sind.

17. Anordnung nach einem der Ansprüche 10 bis 16, **dadurch gekennzeichnet, dass** die Sägestation (10) mit einem Sägeblatt (23) versehen ist, welches länger ist als eine Palette (1) und welches zumindest in zwei Stufen höhenverstellbar ist, wobei das Sägeblatt (23) in der einen Stufe die Verbindungselemente der Palette (1) unmittelbar oberhalb eines Querbretts (3a-3c) zu durchtrennen bestimmt ist und wobei das Sägeblatt (23) in der anderen Stufe die Verbindungselemente der Palette (1) unmittelbar unterhalb eines Querbretts (3a-3c) zu durchtrennen bestimmt ist.

18. Anordnung nach einem der Ansprüche 10 bis 17, **dadurch gekennzeichnet, dass** die Befestigungsstation (18) mit Mitteln (26, 27a-27c, 28, 29a-29c, 30a, 30b, 31a-31 c) zum Fixieren, Belasten und Ausrichten einer teildemontierten Palette (1) sowie von neu anzubringenden Palettenteilen versehen ist.

19. Anordnung nach einem der Ansprüche 10 bis 18, **dadurch gekennzeichnet, dass** die Vorrichtung zum Anbringen von neuen Verbindungselementen in der Befestigungsstation (18) einen Roboter (20) umfasst, der zum Zuführen von Palettenteilen bzw. Palettenmodulen (2a, 2b, 8a, 8b) aus dem Ersatzteilmagazin (15) oder einer Ersatzteilübergabestation (16) in die Befestigungsstation (18) und/oder zum Zuführen der teildemontierten Paletten in die Befestigungsstation (18) und/oder zum Befestigen der neuen Palettenteile an der Palette mittels Verbindungselementen und/oder zur Entnahme der reparierten Paletten aus der Befestigungsstation (18) und zum Übergeben an einen nachgeschalteten Abgabeförderer (19) ausgebildet ist.

20. Anordnung nach Anspruch 19, **dadurch gekennzeichnet, dass** der Roboter (20) derart ausgebildet ist, dass er neu anzubringende Verbindungselemente von oben in die Palette einschlagen und/oder eindrehen kann.

21. Anordnung nach einem der Ansprüche 10 bis 20, **dadurch gekennzeichnet, dass** die Anordnung zumindest ein Fördermittel (14) umfasst, mittels welchem teildemontierte Paletten (1) von einer Station in eine nachfolgende Station beförderbar sind.

22. Anordnung nach einem der Ansprüche 10 bis 21, **dadurch gekennzeichnet, dass** der Befestigungsstation (18) eine Pressstation nachgeschaltet ist, in welcher die Palette von oben und/oder unten derart belastet wird, das ggf. noch vorstehende Verbindungselemente in die Palette hineingedrückt werden.

## Claims

1. A method of repairing pallets (1a) held together by means of connecting elements, particularly Euro wood pallets,comprising five deck boards, three stringers and three bottom boards, the bottom boards being connected by means of connecting blocks to the stringers and the cited pallet parts being held together by means of connecting elements, particularly nails, comprising the first working step involving parting the connecting elements of the pallet part(s) to be renewed followed by removal of the pallet part(s), the next working step involving transfer of both the new pallet parts as well as the partly dismantled pallet into a fastening station (18), the following working step involving securing the new pallet parts in the fastening station (18) by applying new connecting elements to the pallet (1f), **characterized in that** the partly dismantled pallet (1 b) before being transferred to the fastening station (18) is forwarded to an inspection station (13) in which the location of the connecting elements in one or more deck boards is sensed and memorized at least in part and that all new connecting elements are applied top-down into the pallet (1f).

2. The method as set forth in claim 1 wherein the pallets (1a) to be repaired are provided with deck boards, bottom boards and connecting blocks, **characterized in that** the pallet (1) is repaired by a modular replacement of pallet parts by replacing one or more deck boards (2a - 2e) and/or one or more skids (8) comprising a bottom board (4a) and three connecting blocks (5a - 5c).

3. The method as set forth in claim 1 or 2 **characterized in that** before securing a new skid, the location of connecting elements sited in the deck board above the new skid to be applied is sensed and memorized, after which the new connecting elements are applied displaced from the connecting elements sited in said deck board.

4. The method as set forth in claim 3, **characterized in that** the connecting elements provided for securing a new skid are driven top-down into the pallet through each deck board and stringer into the connecting blocks of the corresponding skid located underneath.

5. The method as set forth in any of the preceding claims, **characterized in that** a deck board (2a - 2e) is removed by parting the corresponding connecting elements (6) directly above a stringer (3a - 3c).

6. The method as set forth in any of the preceding claims, **characterized in that** a skid (8) is removed by parting the corresponding connecting elements of the connecting blocks (5a - 5c) assigned to the corresponding skid (8) directly beneath a stringer (3a - 3c).

7. The method as set forth in any of the claims 2 to 6, **characterized in that** a skid to be newly applied is transferred into the fastening station (18) before the partly dismantled pallet, after which the partly dismantled pallet is placed top-down onto the new skid(s) and secured by applying new connecting elements top-down into the pallet.

8. The method as set forth in any of the claims 2 to 7, **characterized in that** a deck board to be newly applied is transferred into the fastening station (18) after the partly dismantled pallet and applied top-down into the partly dismantled pallet located in the fastening station, after which the corresponding deck board is secured by applying new connecting elements top-down into the pallet.

9. The method as set forth in any of the preceding claims, **characterized in that** the pallet located in the fastening station (18) is fixed in place during application of the new connecting elements and loaded such that its contour remains within a standard dimension.

10. An assembly for implementing the method as set forth in any of the preceding claims comprising a sawing station (10) for parting the connecting elements (6) fixing the pallet parts in place, a fastening station (18) for securing the new pallet parts as well as a device for applying new connecting elements in the fastening station (18), **characterized in that** upstream of the fastening station (18) there is provided a inspection station (12) provided with means for sensing the location of connecting elements in one or more deck boards (2a - 2e) of a partly dismantled pallet (1c).

11. The assembly as set forth in claim 10, **characterized in that** the inspection station (12) is provided with means for sensing missing pallet parts of a partly dismantled pallet (1c).

12. The assembly as set forth in claim 11, **characterized in that** the inspection station (12) is provided with optical and/or mechanical sensors for sensing the absence of pallet parts.

13. The assembly as set forth in any of the claims 10 to 12, **characterized in that** the inspection station (12) is provided with optical and/or inductive sensors for sensing the location of nails or nail heads in the deck board.

14. The assembly as set forth in any of the claims 10 to 13, **characterized in that** the assembly includes furthermore a spares stacker (15) configured to house various pallet parts (2a, 2b) or pallet modules (8a, 8b).

15. The assembly as set forth in claim 14, **characterized in that** the spares stacker (15) is configured to house differingly wide skids (8a, 8b) and differingly wide deck boards (2a, 2b).

16. The assembly as set forth in any of the claims 10 to 15, **characterized in that** the assembly includes a controller (21) connected to the inspection station (12) as well as to the device for applying new connecting elements, the device being activatable as a function of the location of connecting elements (6) located in one or more deck boards (2a - 2e) of a partly dismantled pallet such that the new connecting elements are applicable displaced to connecting elements located in one or more deck boards (2a - 2e).

17. The assembly as set forth in any of the claims 10 to 16, **characterized in that** the sawing station (10) is provided with a sawblade (23) which is longer than a pallet (1) and which is height-adjustable in at least two stages, the sawblade (23) being intended in the one stage to part the connecting elements of the pallet directly above a stringer (3a - 3c) and the sawblade (23) in the other stage is intended to part the connecting elements of the pallet (1) directly below the stringer (3a - 3c).

18. The assembly as set forth in any of the claims 10 to 17, **characterized in that** the fastening station (18) is provided with means (26, 27a - 27c, 28, 29a - 29c, 30a, 30b, 31 a, 31 c) for fixing in place, loading and orienting a partly dismantled pallet (1) as well as pallet parts to be newly applied.

19. The assembly as set forth in any of the claims 10 to 18, **characterized in that** the device for applying new connecting elements in the fastening station (18) includes a robotic manipulator (20) configured for supplying pallet parts or pallet modules (2a, 2b, 8a, 8b) from the spares stacker (15) or a spares transfer station (16) to the fastening station (18) and/or for forwarding partly dismantled parts to the fastening station (18) and/or for securing the new pallet parts to the pallet by means of connecting elements and/or for retrieving the repaired pallets from the fastening station (18) or for transfer to a downstream discharge conveyor (19).

20. The assembly as set forth in claim 19, **characterized in that** the robotic manipulator (20) is configured such that it can hammer and/or screw elements to be newly applied top-down into the pallet.

21. The assembly as set forth in any of the claims 10 to 20, **characterized in that** the assembly includes at least one conveyor (14) by means of which partly dismantled pallets (1) are transportable from one station to a following station.

22. The assembly as set forth in any of the claims 10 to 21, **characterized in that** the fastening station (18) has downstream a press station in which the pallet is loaded top-down and/or bottom-up such that any still projecting connecting elements are pressed into the pallet.

## Revendications

1. Procédé de réparation de palettes (1a) assemblées à l'aide d'éléments d'assemblage, en particulier des euro-palettes en bois, comportant cinq planches supérieures, trois planches transversales et trois planches inférieures, sachant que les planches inférieures sont reliées aux planches transversales par des cales d'assemblage et que les différentes parties de la palette susnommées sont assemblés à l'aide d'éléments d'assemblage, en particulier des pointes, sachant que dans un premier temps, les éléments d'assemblage de la pièce ou des pièces de palette à changer sont sectionnés et que la pièce ou les pièces de palette à changer sont retirées, que dans un second temps les nouvelles pièces de palette, de même que la palette en partie démontée sont introduites dans une station de montage (18) et que dans une étape suivante, les nouvelles pièces de palette sont fixées à la palette (1) dans la station de montage à l'aide de nouveaux éléments d'assemblage, **caractérisé en ce qu'**avant d'être introduite dans la station de montage (18), la palette partiellement démontée (1b) est passée dans une station de contrôle (13) dans laquelle la position d'éléments d'assemblage se trouvant dans une ou plusieurs planches supérieures est tout au moins partiellement vérifiée puis enregistrée et **en ce que** tous les nouveaux éléments d'assemblage sont disposés depuis la face supérieure de la palette (1).

2. Procédé selon la revendication 1, sachant que les palettes devant être réparées sont pourvues de planches supérieures, de planches inférieures et de cales d'assemblage, **caractérisé en ce que** la palette (1) est réparée par changement modulaire de pièces de palette, c'est-à-dire en changeant une ou plusieurs planches supérieures (2a-2e) et/ou un ou plusieurs patins (8) constitués chacun d'une planche inférieure (4a) et de trois cales d'assemblage (5a-5c).

3. Procédé selon la revendication 1 ou 2, **caractérisé en ce qu'**avant qu'un nouveau patin soit fixé, la position des éléments d'assemblage se trouvant dans la planche supérieure située au-dessus du nouveau patin devant être monté, est vérifiée et enregistrée et **en ce qu'**ensuite, les nouveaux éléments d'assemblage sont placés en décalage par rapport aux éléments d'assemblage se trouvant dans la planche supérieure susnommée.

4. Procédé selon la revendication 3, **caractérisé en ce que** les éléments d'assemblage prévus pour fixer un nouveau patin sont enfoncés depuis la face supérieure de la palette à travers la planche supérieure et la planche inférieure jusque dans la cale d'assemblage du patin correspondant se trouvant en dessous.

5. Procédé selon l'une des revendications précédentes, **caractérisé en ce qu'**une planche supérieure (2a-2e) est enlevée en sectionnant les éléments d'assemblage (6) directement au-dessus d'une planche transversale (3a-3c).

6. Procédé selon l'une des revendications précédentes, **caractérisé en ce qu'**un patin (8) est enlevé en sectionnant les éléments d'assemblage des cales d'assemblage (5a-5c) affectées à au patin respectif, directement en dessous d'une planche transversale (3a-3c).

7. Procédé selon l'une des revendications 2 à 6, **caractérisé en ce qu'**un nouveau patin devant être installé est introduit dans la station de montage (18) avant la palette partiellement démontée et **en ce qu'**ensuite, la palette partiellement démontée est posée au-dessus du ou des nouveaux patins et est fixée en plaçant de nouveaux éléments d'assemblage depuis la face supérieure de la palette.

8. Procédé selon l'une des revendications 2 à 7, **caractérisé en ce qu'**une nouvelle planche supérieure devant être posée est introduite dans la station de montage (18) après la palette partiellement démontée et est posée au-dessus de la palette partiellement démontée se trouvant dans la station de montage, et **en ce qu'**ensuite, la planche supérieure correspondante est fixée en plaçant de nouveaux éléments d'assemblage depuis la face supérieure de la palette.

9. Procédé selon l'une des revendications précédentes, **caractérisé en ce que** pendant la pose des nouveaux éléments d'assemblage, les palettes réceptionnées dans la station de montage (18) sont fixées et compressées de telle sorte que leur contour respecte des dimensions normalisées.

10. Dispositif pour l'exécution du procédé selon l'une des revendications précédentes, avec une station de sciage (10) servant à sectionner les éléments d'assemblage (8) fixant les pièces de palette entre elles, avec une station de montage (18) servant à fixer les nouvelles pièces de palette ainsi qu'avec un dispositif de placement de nouveaux éléments d'assemblage dans la station de montage (18), **caractérisé en ce qu'**une station de contrôle (12) se trouve en amont de la station de montage (18), laquelle est équipée de moyens de reconnaissance de la position d'éléments d'assemblage (6) se trouvant dans une ou plusieurs planches supérieures (2a-2e) d'une palette partiellement démontée (1c).

11. Dispositif selon la revendication 10, **caractérisé en ce que** la station de contrôle (12) est équipée de moyens de reconnaissance des pièces de palettes manquantes sur une palette partiellement démontée (1c).

12. Dispositif selon la revendication 11 **caractérisé en ce que** la station de contrôle (12) est équipée de sondes optiques et/ou mécaniques servant à détecter l'absence de pièces de palettes.

13. Dispositif selon l'une des revendications 10 à 12 **caractérisé en ce que** la station de contrôle est équipée de sondes optiques et/ou inductives servant à détecter la position des pointes ou des têtes de pointe se trouvant dans une planche supérieure.

14. Dispositif selon l'une des revendications 10 à 12 **caractérisé en ce que** le dispositif comporte de plus un chargeur pour pièces de remplacement (15), lequel est conçu pour recevoir différentes pièces de palette (2a, 2b) ou modules de palette (8a,8b).

15. Dispositif selon la revendication 14, **caractérisé en ce que** le chargeur pour pièces de remplacement (15) est conçu pour recevoir des patins (8a, 8b) de différentes largeurs et des planches supérieures (2a, 2b) de différentes largeurs.

16. Dispositif selon l'une des revendications 10 à 15
**caractérisé en ce que** le dispositif comporte une unité de commande (21), laquelle est reliée à la station de contrôle (18) ainsi qu'au système de positionnement de nouveaux éléments d'assemblage, sachant que le système peut être commandé en fonction de la position des éléments d'assemblage (6) se trouvant dans une ou plusieurs planches supérieures (2a-2e) d'une palette partiellement démontée (1c) de telle sorte que les nouveaux éléments d'assemblage puissent être placés en décalage par rapport aux éléments d'assemblage se trouvant éventuellement dans une ou plusieurs planches supérieures (2a-2e).

17. Dispositif selon l'une des revendications 10 à 16 **caractérisé en ce que** la station de sciage (10) est équipée d'une lame de scie (23), laquelle est plus longue qu'une palette (1) et laquelle peut être réglée sur au moins deux hauteurs, sachant que la lame de scie (23) sert dans une première étape à sectionner les éléments d'assemblage de la palette (1) directement au-dessus d'une planche transversale (3a-3c) et dans une autre étape à sectionner les éléments d'assemblage de la palette (1) directement en dessous d'une planche transversale (3a-3c).

18. Dispositif selon l'une des revendications 10 à 17 **caractérisé en ce que** la station de montage (18) est équipée de moyens (26, 27a-27c, 28, 29a-29c, 30a, 30b, 31a-31c) servant à fixer, comprimer et positionner une palette partiellement démontée (1) ainsi que de nouvelles pièces de palette devant être posées.

19. Dispositif selon l'une des revendications 10 à 18 **caractérisé en ce que** le système de placement de nouveaux éléments d'assemblage dans la station de montage (18) comporte un robot (20) conçu pour transporter des pièces de palette ou des modules de palette (2a, 2b, 8a, 8b) du chargeur pour pièces de remplacement (15) ou d'une station de transmission de pièces de remplacement (16) jusqu'à la station de montage (18) et/ou pour introduire les palettes partiellement démontées dans la station de montage (18) et/ou pour fixer les nouvelles pièces de palette sur la palette à l'aide d'éléments d'assemblage et/ou pour extraire les palettes réparées de la station de montage (18) et les déposer sur un tapis roulant (19)situé en aval.

20. Dispositif selon la revendication 19 **caractérisé en ce que** le robot (20) est conçu de telle sorte qu'il puisse enfoncer et/ou visser de nouveaux éléments d'assemblage depuis le dessus dans de la palette.

21. Dispositif selon l'une des revendications 10 à 20 **caractérisé en ce que** le dispositif comporte au moins un système de transport (14) à l'aide duquel les palettes partiellement démontées (1) peuvent être transportées d'une station à la suivante.

22. Dispositif selon l'une des revendications 10 à 21 **caractérisé en ce qu'**une station de compression est située en amont de la station de montage (18), dans laquelle la palette subit une pression sur le dessus et/ou sur le dessous, afin que des éléments d'assemblage éventuellement saillants puissent être enfoncés dans la palette.
